**Europäisches Patentamt**

**European Patent Office**

**Office européen des brevets**

(19)

(11) Numéro de publication : **0 187 054 B1**

# FASCICULE DE BREVET EUROPÉEN

(12)

(45) Date de publication du fascicule du brevet :
26.04.89

(21) Numéro de dépôt : 85402110.2

(22) Date de dépôt : 04.11.85

(51) Int. Cl.⁴ : **G 02 F 1/133**, G 02 F 1/01, H 01 J 17/49

(54) **Procédé de réparation des électrodes d'un panneau d'affichage.**

(30) Priorité : 06.11.84 FR 8416872

(43) Date de publication de la demande :
09.07.86 Bulletin 86/28

(45) Mention de la délivrance du brevet :
26.04.89 Bulletin 89/17

(84) Etats contractants désignés :
DE GB NL

(56) Documents cités :
WO—A—81/017 71
PROCEEDINGS OF THE SOCIETY FOR INFORMA-
TION DISPLAY, vol. 21, no. 4, 1980, pages 330-340,
Los Angeles, CA, US; P. PLESHKO et al.: "Repair of
AC plasma display panels"
IBM TECHNICAL DISCLOSURE BULLETIN, vol. 25,
no. 7A, décembre 1982, pages 3185-3186, New York,
US; M.J. COSTA: "Spare conductors in plasma display panel"
PATENTS ABSTRACTS OF JAPAN, vol. 8, no. 97 (P-
272) [1534], 8 mai 1984; & JP - A - 59 9634

(73) Titulaire : THOMSON-CSF
173, Boulevard Haussmann
F-75379 Paris Cédex 08 (FR)

(72) Inventeur : Deschamps, Jacques
THOMSON-CSF SCPI 173, bld Haussmann
F-75379 Paris Cedex 08 (FR)
Inventeur : Gay, Michel
THOMSON-CSF SCPI 173, bld Haussmann
F-75379 Paris Cedex 08 (FR)
Inventeur : Salavin, Serge
THOMSON-CSF SCPI 173, bld Haussmann
F-75379 Paris Cedex 08 (FR)

(74) Mandataire : Mayeux, Michèle et al
THOMSON-CSF SCPI
F-92045 PARIS LA DEFENSE CEDEX 67 (FR)

## Description

La présente invention concerne un procédé de réparation des électrodes d'un panneau d'affichage.

Les panneaux d'affichage auxquels s'applique le procédé selon l'invention sont des panneaux tels que par exemple les panneaux à plasma, les panneaux électro-luminescents, les panneaux à cristaux liquides... Ces panneaux comportent deux réseaux d'électrodes parallèles, réalisés sur les deux faces du panneau, ces faces étant positionnées de façon que les deux réseaux d'électrodes soient orthogonaux.

Ces électrodes sont de différentes natures. Elles peuvent être constituées de métal, d'oxyde conducteur...

Diverses technologies peuvent être utilisées pour les réaliser, comme par exemple, l'évaporation, la pulvérisation, la sérigraphie, la photolithogravure...

Chaque panneau comporte un grand nombre d'électrodes, couramment plusieurs centaines et parfois plusieurs milliers. De plus, ces électrodes sont souvent assez étroites. Dans les panneaux à plasma, on trouve par exemple des électrodes de 50 à 150 μm de large, à un pas variant de 0,2 à 0,6 mm.

Le problème qui se pose est qu'il est très difficile de fabriquer un panneau d'affichage ne comportant pas d'électrode coupée.

Dans le cas de la fabrication des panneaux à plasma de grandes dimensions en moyenne plus d'un panneau sur deux comporte une ou plusieurs électrodes coupées.

Lorsqu'une électrode est coupée, comme l'alimentation des électrodes ne se fait en général que par une de leurs extrémités, toute une partie de l'électrode ne reçoit pas de signal de commande. En conséquence, la coupure d'une électrode empêche la commande de plusieurs points élémentaires du panneau, ce qui rend le panneau invendable.

On peut n'utiliser que les panneaux ne comportant aucune électrode coupée, mais de ce fait, les rendements de fabrication des panneaux d'affichage sont peu élevés.

On est donc amené à tenter de réparer les éventuelles coupures d'électrodes.

Dans le cas des panneaux à plasma, lorsqu'on réalise des électrodes en or, on sait réparer les coupures en déposant à la main une couche d'or sur les électrodes coupées.

Ce procédé ne permet pas la réparation des coupures détectées après la mise sous tension du panneau, et qui peuvent d'ailleurs être dues aux divers traitements subis par les électrodes avant le scellement par un joint d'étanchéité des deux dalles portant les deux réseaux d'électrodes.

Enfin, ce procédé de réparation est difficilement applicable aux panneaux à plasma comportant des électrodes en couches minces, et notamment aux électrodes comportant une couche supérieur en aluminium.

Il est connu dans l'Art Antérieur de réparer les électrodes coupées en brasant un fil métallique à l'extrémité non-alimentée de chaque électrode coupée et en reliant ce fil métallique au signal de commande de l'électrode.

L'article IBM TDB Vol 25 n° 7A Déc. 82 décrit un procédé de réparation avec fils brasés. Le brevet WO-A-81/01771 décrit un procédé de réparation avec une nappe de fils de réparation pouvant être brasés à une extrémité de conducteurs coupés.

Cette réparation peut être effectuée à n'importe quel stade de la fabrication du panneau puisqu'il suffit d'avoir accès aux extrémités des électrodes, ce qui est possible même après le scellement du panneau.

Ce procédé de réparation par fil métallique brasé présente notamment les inconvénients suivants :

- dans le cas d'électrodes en aluminium, on rencontre des difficultés à braser convenablement un fil métallique en cuivre par exemple, d'autant plus que les électrodes sont de faible épaisseur ;
- on peut craindre un arrachement des fils de réparation lorsque le panneau est soumis à des contraintes importantes, qu'elles soient thermiques ou mécaniques. C'est le cas lorsque le panneau est soumis à des vibrations ;
- il peut être difficile de cacher à la vue les fils de réparation, en particulier pour les panneaux devant être observés en transparence ;
- la présence de fils de réparation entraîne des dénivellations pouvant gêner la prise des autres contacts ;
- enfin, cette réparation nécessite l'utilisation de plots pour alimenter les fils de réparation, or ces plots ont normalement d'autres utilisations.

La présente invention concerne un procédé de réparation des électrodes coupées qui ne présente pas les inconvénients des procédés connus qui viennent d'être exposés.

La présente invention concerne un procédé de réparation des électrodes d'un panneau d'affichage, comportant deux réseaux d'électrodes réalisés sur les deux faces d'un panneau, ces électrodes étant alimentées par une de leur extrémité, caractérisé en ce qu'il comporte les étapes suivantes :

- on réalise sur chaque face du panneau au moins une électrode dite périphérique qui entoure chaque réseau d'électrodes ;
- on relie par un dépôt conducteur les deux extrémités d'une électrode coupée à une électrode périphérique.

D'autres objets, caractéristiques et résultats de l'invention ressortiront de la description suivante illustrée par les figures annexées qui représentent des panneaux d'affichage obtenus par diverses variantes du procédé de réparation selon l'invention.

Sur les différentes figures, les mêmes références désignent les mêmes éléments, mais pour des raisons de clarté, les cotes et proportions des divers éléments ne sont pas respectées.

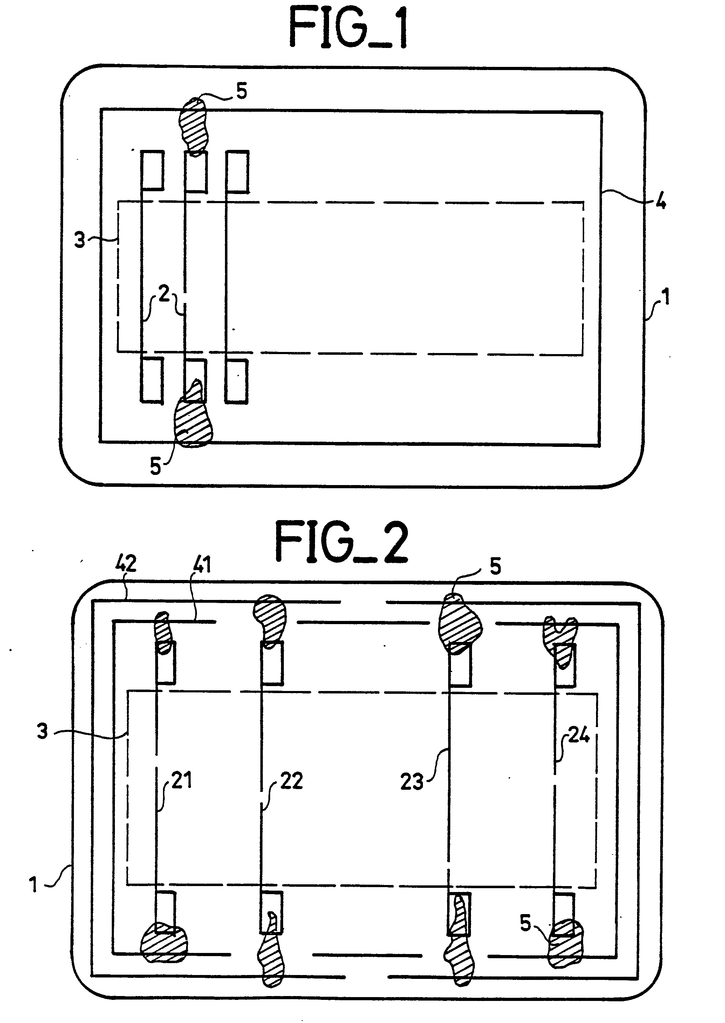

Sur la figure 1, on a représenté de façon schématique l'une des faces d'un panneau d'affichage.

Cette face peut être constituée d'une dalle de verre 1 portant un réseau d'électrodes 2. Pour simplifier la figure, seules trois électrodes ont été représentées, dont une électrode présentant une coupure. On a représenté en pointillés sur la figure, la position du joint d'étanchéité 3 qui détermine la zone du panneau qui n'est plus accessible après que les deux faces du panneau aient été scellées.

Selon l'invention, on réalise, généralement en même temps que le réseau d'électrodes 2, une électrode 4 dite électrode périphérique qui entoure le réseau d'électrodes. L'électrode périphérique 4 est donc située en dehors du joint car les électrodes du réseau ont leurs extrémités situés en dehors du joint pour être accessibles après le scellement.

Pour réparer l'électrode coupée, on relie ses deux extrémités à l'électrode périphérique 4. Comme l'une des extrémités de l'électrode coupée reçoit un signal de commande, les deux connexions réalisées permettent d'alimenter toute l'électrode coupée par son signal de commande. Les deux connexions 5 sont réalisées manuellement, par exemple par des traits de laque d'argent.

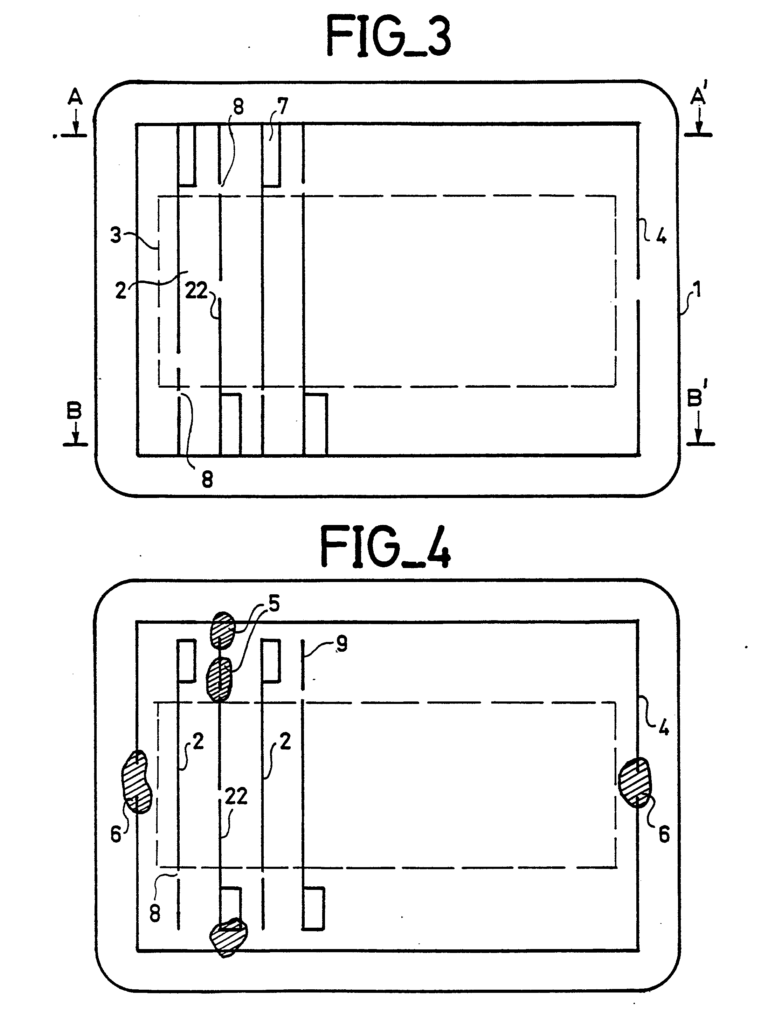

Une seule électrode périphérique permet la réparation de deux électrodes coupées, et plusieurs électrodes périphériques peuvent être utilisées, comme cela est illustré sur la figure 2. Sur cette figure, on a représenté quatre électrodes coupées référencées 21, 22, 23, 24 et deux électrodes périphériques 41 et 42.

L'électrode périphérique 41 est sectionnée en quatre tronçons. Les deux tronçons latéraux sont reliés aux extrémités des électrodes 21 et 24.

L'électrode périphérique 42 est sectionnée en deux tronçons auxquels sont reliées les électrodes 22 et 23.

Le nombre d'électrodes périphériques réalisées est fonction du nombre de réparations jugé nécessaire pour utiliser la plupart des panneaux.

il faut que l'électrode périphérique la plus proche du joint soit reliée aux électrodes coupées les moins centrales.

Les électrodes périphériques peuvent être utilisées en cours de fabrication, dans le test des panneaux qui consiste à court-circuiter les électrodes. Pratiquement, on court-circuite les électrodes par moitié : les électrodes d'ordre pair et d'ordre impair sont court-circuitées séparément.

Sur la figure 3, on a représenté un panneau dans lequel l'électrode périphérique 4 est coupée en deux parties et où chacune de ces parties court-circuite la moitié des électrodes.

il faut bien sûr que les électrodes 2 soient réalisées de façon à être en contact avec les électrodes périphériques.

En fin de fabrication, on referme l'électrode périphérique par exemple par des traits de laque d'argent 6 comme cela est représenté sur la figure 4. On supprime aussi les court-circuits entre les électrodes 2 du réseau et l'électrode périphérique 4 par meulage le long des axes AA' et BB' indiqués sur la figure 3.

Pour appliquer le procédé de réparation selon l'invention, il n'est pas indispensable que les deux extrémités de chaque électrode présentent un élargissement comme cela est représenté sur les figures 1 et 2.

Sur la figure 3, seule l'une des extrémités d'une électrode présente un élargissement 7.

Pour limiter l'encombrement, sur la figure 3, on remarque qu'il y a alternance, à chaque extrémité des électrodes, d'une électrode avec élargissement 7 et d'une électrode sans élargissement. La figure 3 montre que l'on réalise une coupure 8 vers l'extrémité non-élargie de chaque électrode. Cette coupure 8 est située en dehors du joint d'étanchéité 3.

Cette coupure permet de court-circuiter les électrodes par moitié comme cela est représenté sur la figure 3.

La figure 4 montre comment on applique le procédé selon l'invention après que le panneau ait été testé par court-circuit de ses électrodes.

Les contacts 6 referment l'électrode périphérique, les électrodes 2 ne sont plus en contact avec l'électrode périphérique et pour réparer la coupure de l'électrode 22, on a réalisé trois dépôts de laque d'argent 5. Pour réparer une seule électrode coupée, un seul contact 6 est suffisant.

Les coupures 8 qui sont réalisées vers l'extrémité non-élargie de chaque électrode permettent comme on l'a vu précédemment de court-circuiter les électrodes par moitié.

Ces coupures 8 entraînent un autre avantage qui va être expliqué en se référant à la figure 4.

On désigne par la référence 9 la partie terminale de chaque électrode qui est séparée du reste de l'électrode par une coupure 8.

Cette partie 9 n'est pas alimentée sauf dans le cas où elle appartient à une électrode coupée, puis réparée, telle que l'électrode 22 sur la figure 4.

On réduit ainsi les risques de court-circuit aux extrémités des électrodes.

C'est seulement lorsqu'une électrode est coupée que son extrémité 9 est alimentée et qu'il risque de se produire des court-circuits entre cette partie 9 et les extrémités élargies des électrodes voisines.

On sait protéger, la partie 9 d'une électrode coupée pour éviter les court-circuits.

La réalisation des coupures 8 permet donc de réduire le pas des électrodes, sans augmenter les risques de court-circuit.

Le procédé de réparation selon l'invention peut être utilisé en même temps que les procédés de réparation connus.

**Revendications**

1. Procédé de réparation des électrodes d'un panneau d'affichage, comportant deux réseaux d'électrodes (2) réalisés sur deux faces (1) du panneau, ces électrodes étant alimentées par une de leurs extrémités, caractérisé en ce qu'il comporte les étapes suivantes :

- on réalise sur chaque face du panneau qui comporte un réseau d'électrodes au moins une électrode (4) dite périphérique qui entoure le réseau d'électrodes ;

- on relie par un dépôt conducteur (5) les deux extrémités d'une électrode coupée (2) à la même électrode périphérique (4).

2. Procédé selon la revendication 1, caractérisé en ce que :

- on sectionne chaque électrode périphérique (41, 42) pour obtenir au moins deux tronçons d'électrode périphérique ;

- on relie au même tronçon de l'électrode périphérique les deux extrémités d'une électrode coupée (21, 22, 23, 24).

3. Procédé selon l'une des revendications 1 ou 2, caractérisé en ce que les électrodes périphériques (4) sont réalisées en même temps que les deux réseaux d'électrodes (2) du panneau.

4. Procédé selon l'une des revendications 1 à 3, caractérisé en ce que le dépôt conducteur (5) est un dépôt réalisé manuellement de laque d'argent.

5. Procédé selon l'une des revendications 1 à 4, caractérisé en ce que à chaque extrémité des électrodes (2), il y a alternance d'une électrode présentant un élargissement (7) à son extrémité et d'une électrode sans élargissement.

6. Procédé selon la revendication 5, caractérisé en ce que chaque électrode (2) présente à proximité de son extrémité qui ne présente pas d'élargissement (7) une interruption intentionnée (8) et en ce que les électrodes coupées (8) sont réparées par un dépôt conducteur (5) additionnel sur les interruptions intentionnées.

## Claims

1. A method for repairing the electrodes of a display panel comprising two electrode networks (2) made on two faces (1) of the panel, said electrodes being fed through one of their ends, characterized in that it comprises the following stages :

- production on each face of the panel, which comprises a network of electrodes, of at least one electrode (4), termed the peripheral electrode, which surrounds the electrode network ;

- connection by means of a conducting deposit (5) of the two ends of a cut electrode (2) with the same said peripheral electrode (4).

2. The method as claimed in claim 1, characterized by :

-severing each peripheral electrode (41 and 42) in order to produce at least two limbs of the peripheral electrode ;

- connection of the two ends of a cut electrode (21, 22, 23 and 34) with the same limb of the peripheral electrode.

3. The method as claimed in claim 1 or in claim 2, characterized in that the peripheral electrodes (4) are produced at the same time as the two electrode networks (2) of the panel.

4. The method as claimed in any one of the claims 1 through 3, characterized in that the conductor deposit (5) is a manually applied deposit of silver lacquer.

5. The method as claimed in any one of the claims 1 through 4, characterized in that at each end of the electrodes (2) there is an alternation between an electrode having a wider part (7) at its end and an electrode without any wider part.

6. The method as claimed in claim 5, characterized in that near its end not having a wider part (7) each electrode (2) has an intentional interruption (8) and in that the severed electrodes (8) are repaired by a additional conductor deposit (5) on the intentional interruptions.

## Patentansprüche

1. Verfahren zum Reparieren der Elektroden einer Anzeigetafel, die zwei auf zwei Flächen (1) der Tafel gebildete Elektrodennetzwerke (2) aufweist, wobei diese Elektroden über eines ihrer Enden gespeist werden, dadurch gekennzeichnet, daß es die folgenden Schritte umfaßt :

- auf jeder ein Elektrodennetzwerk umfassenden Fläche der Tafel wird wenigstens eine sogenannte Umfangselektrode (4) gebildet, welche das Elektrodennetzwerk umgibt,

- die beiden Enden einer durchtrennten Elektrode (2) werden mit derselben Umfangselektrode (4) durch einen leitenden Überzug (5) verbunden.

2. Verfahren nach Anspruch 1, dadurch gekennzeichnet, daß:

- jede Umfangselektrode (41, 42) so geschnitten wird, daß wenigstens zwei Abschnitte der Umfangselektrode erhalten werden ;

- die beiden Enden einer durchtrennten Elektrode (21, 22, 23, 24) mit demselben Abschnitt der Umfangselektrode verbunden werden.

3. Verfahren nach Anspruch 1 oder 2, dadurch gekennzeichnet, daß die Umfangselektroden (4) gleichzeitig mit den beiden Elektrodennetzwerken (2) der Tafel hergestellt werden.

4. Verfahren nach einem der Ansprüche 1 bis 3, dadurch gekennzeichnet, daß der leitende Überzug (5) ein manuell aufgebrachter Silberlack-Überzug ist.

5. Verfahren nach einem der Ansprüche 1 bis 4, dadurch gekennzeichnet, daß an jedem Ende der Elektroden (2) eine an ihrem Ende eine Aufweitung (7) aufweisende Elektrode sich mit einer aufweitungslosen Elektrode abwechselt.

6. Verfahren nach Anspruch 5, dadurch gekennzeichnet, daß jede Elektrode (2) in der Nähe ihres Endes, das keine Aufweitung (7) aufweist, eine beabsichtigte Unterbrechung (8) aufweist und daß die durchtrennten Elektroden (8) an den beabsichtigten Unterbrechungsstellen durch einen zusätzlichen leitenden Überzug (5) repariert werden.

# FIG_1

# FIG_2

# FIG_3

# FIG_4